# EUROPEAN PATENT APPLICATION

(11) **EP 2 336 512 A2**
(43) Date of publication of application: **22.06.2011**
(21) Application number: 10195775.1
(22) Date of filing: 17.12.2010
(51) Int. Cl.: F01N 3/20, F01N 3/30, F01N 3/36, F01N 9/00

(54) **Control module for regulating and delivering fuel and air to a fuel reformer**

(30) Priority: 18.12.2009 US 287736 P
(71) Applicant: ITT Manufacturing Enterprises, Inc., Wilmington, Delaware 19801 (US)
(72) Inventor: Wiley, Darrell T., Summerville, SC 29483 (US)
(74) Representative: Dreiss

(57) **Abstract**

A control module for regulating and delivering quantities of compressed air and fuel to a fuel reformer is described herein. The control module includes a housing, a compressed air circuit coupled to a source of compressed air, and a fuel circuit coupled to a source of fuel. Each circuit includes: (i) a flow passageway formed in the housing that extends between an inlet port that is configured to be fluidly coupled to either the source of compressed air or the source of fuel and an outlet port that is configured to be fluidly coupled to the fuel reformer, (ii) a discrete valve positioned within the flow passageway that is configured to either permit or prevent the passage of fluid through the flow passageway, and (iii) a regulator valve positioned within the flow passageway that is configured to maintain a constant pressure differential across the flow passageway.

## Description

### CROSS-REFERENCE TO RELATED APPLICATION

This application claims priority to U.S. Provisional Patent Application No. 61/287,736 filed December 18, 2009, the contents of which are incorporated herein by reference in their entirety.

### TECHNICAL FIELD

The present invention relates to a control module for regulating and delivering quantities of fuel and air to a fuel reformer, particularly, a diesel fuel reformer.

### BACKGROUND OF THE INVENTION

Emission regulations for diesel engines, such as Tier 2 Bin 5 and Euro 6, are driving original equipment manufacturers (OEMs) to incorporate exhaust treatment devices into engine exhaust systems in order to comply with those regulations. One example of an exhaust treatment device is a fuel reformer. A fuel reformer converts diesel fuel into hydrogen-rich reformate using air in a catalytic partial oxidation process. The reformate, which is rich in hydrogen and carbon monoxide, is used to regenerate and desulfate NOx adsorbers as well as reduce the release of Nitrogen Oxides (NOx), Carbon Monoxide (CO), particulate matter (PM), and Hydrocarbons (HC) through the exhaust system. The reformate is injected directly into an exhaust system of an automobile without requiring the engine to operate at a rich air-fuel ratio. Both air and diesel fuel are supplied to the fuel reformer. This invention relates to a control module for supplying controlled quantities of air and diesel fuel to the fuel reformer.

### SUMMARY OF THE INVENTION

According to one aspect of the invention, a control module for regulating and delivering compressed air and fuel to a fuel reformer is provided. The control module includes a housing including multiple fluid flow passages, at least one compressed air circuit that is configured to be coupled to a source of compressed air, and a fuel circuit that is configured to be coupled to a source of fuel. Each circuit includes: (i) a flow passageway formed in the housing that extends between an inlet port that is configured to be fluidly coupled to either the source of compressed air or the source of fuel and an outlet port that is configured to be fluidly coupled to the fuel reformer to deliver either compressed air or fuel into the fuel reformer, respectively, (ii) a discrete valve positioned within the flow passageway that is configured to either permit the passage of fluid through the flow passageway in an open position of the discrete valve or prevent the passage of fluid through the flow passageway in a closed position of the discrete valve, and (iii) a regulator valve positioned within the flow passageway that is configured to maintain a constant pressure differential across the flow passageway.

According to another aspect of the invention, the fuel circuit includes a bypass fuel passageway that is fluidly coupled to the flow passageway of the fuel circuit and extends between a location that is upstream of the fuel circuit discrete valve and a location that is downstream of the fuel circuit discrete valve, wherein, in operation, fuel is delivered into the bypass fuel passageway of the flow passageway during start-up of the vehicle.

Further embodiments are defined in the claims.

### BRIEF DESCRIPTION OF THE FIGURES

The invention is best understood from the following detailed description when read in connection with the accompanying drawing. Included in the drawing are the following figures:
FIG. 1 depicts a schematic block diagram of a control module assembly that is fluidly connected to a diesel fuel reformer, an air compressor and a diesel fuel tank according to one exemplary embodiment of the invention.

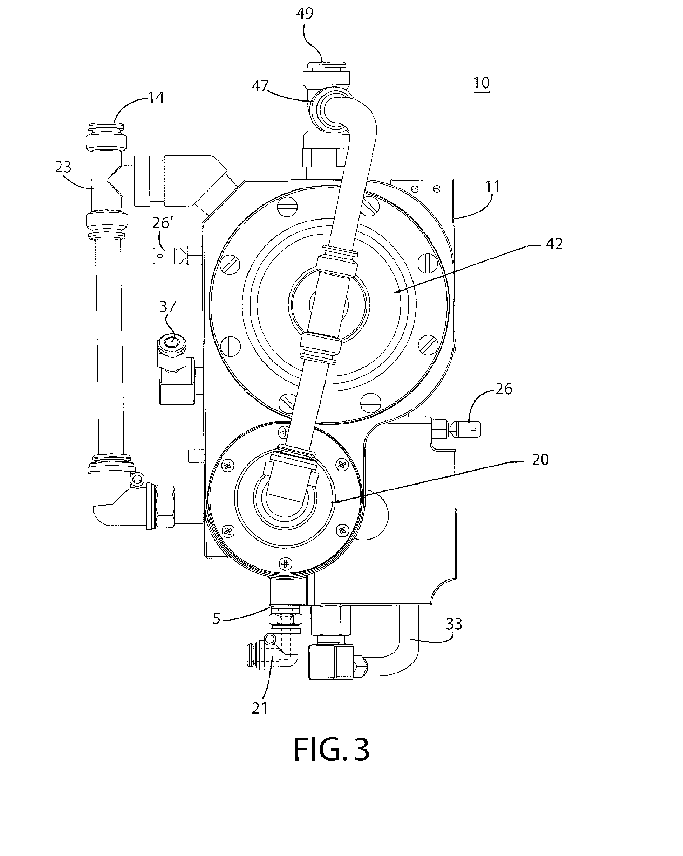

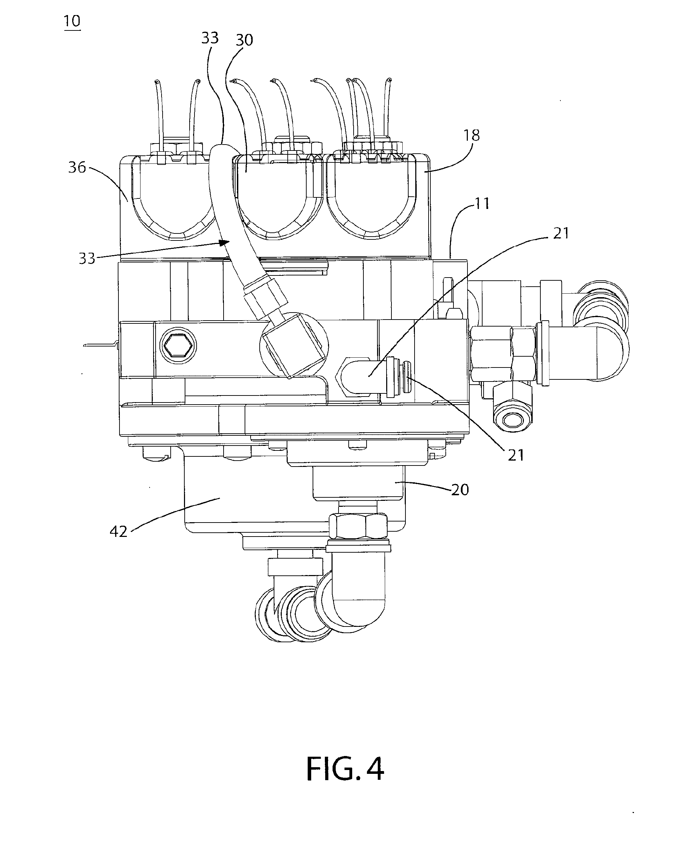

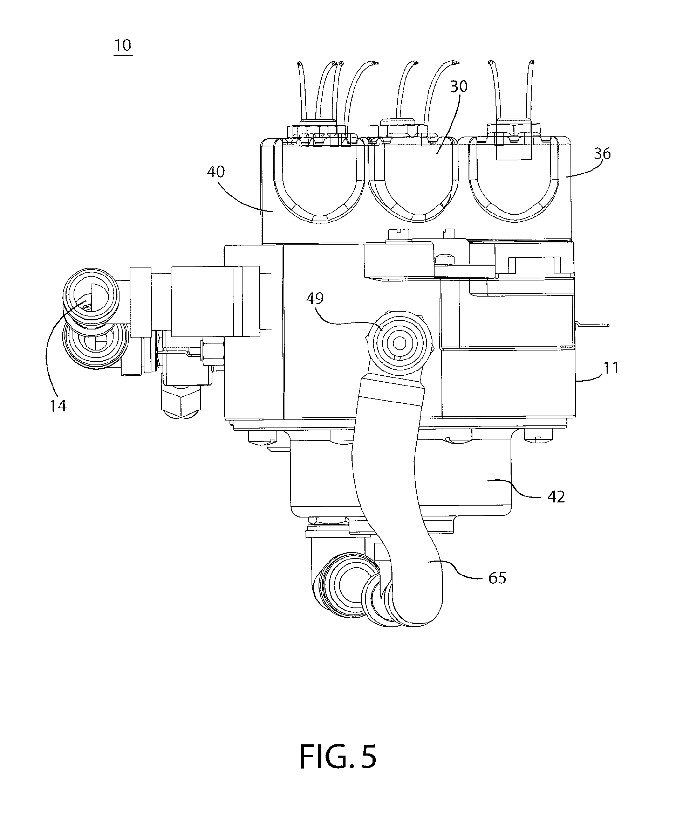

FIGS. 2-7 depict a top plan, bottom plan, left side elevation, right side elevation, front elevation, and rear elevations views, respectively, of the control module assembly of FIG. 1.
FIGS. 8-12 are cross-sectional views of the control module assembly of FIG. 2 taken along the lines 8-8, 9-9, 10-10, 11-11 and 12-12, respectively.
FIGS. 13A-13D, 13F and 13G are top plan, rear elevation, front elevation, left elevation, right elevation and bottom plan views, respectively, of the control module housing of FIG. 2.
FIGS. 13E, 13H, 13I, 13J, 13K and 13L are cross-sectional views of the control module housing of FIG. 13A taken along the lines 13E-13E, 13H-13H, 131-131, 13J-13J, 13K-13K, and 13L-13L, respectively.

### DETAILED DESCRIPTION OF THE INVENTION

Although the invention is illustrated and described herein with reference to specific embodiments, the invention is not intended to be limited to the details shown. Rather, various modifications may be made in the details within the scope and range of equivalents of the claims and without departing from the invention. In the figures, like item numbers are used to refer to like elements.

Referring generally to all of the figures, and according to one aspect of the invention, a control module 10 for regulating and delivering compressed air and fuel to a fuel reformer 12 is provided. The control module 10 includes a housing 11 including multiple fluid flow passages, at least one compressed air circuit 15, 38 that is configured to be coupled to a source of compressed air 1, and a fuel circuit 17 that is configured to be coupled to a source of fuel 16. Each circuit 15, 17, 38 includes a flow passageway 19, 3, 8 formed in the housing 11 that extends between an inlet port 2, 4, 7 that is configured to be fluidly coupled to either the source of compressed air 1 or the source of fuel 16 and an outlet port 5, 6, 9 that is configured to be fluidly coupled to the fuel reformer 12 to deliver either compressed air or fuel into the fuel reformer 12, respectively. Each circuit 15, 17, 38 also includes a discrete valve 18, 30, 40 positioned within the flow passageway 19, 3, 8 that is configured to either permit the passage of fluid through the flow passageway 19, 3, 8 in an open position of the discrete valve 18, 30, 40 or prevent the passage of fluid through the flow passageway 19, 3, 8 in a closed position of the discrete valve 18, 30, 40, respectively. Each circuit 15, 17, 38 also includes a regulator valve 20, 24, 42 positioned within the flow passageway 19, 3, 8 that is configured to maintain a constant pressure differential across the flow passageway 19, 3, 8, respectively.

Referring still to the figures generally, and according to another aspect of the invention, the fuel circuit 17 of the control module includes a bypass fuel passageway 31 that is fluidly coupled to the flow passageway 3 of the fuel circuit 17 and extends between a location that is upstream of the fuel circuit discrete valve 30 and a location that is downstream of the fuel circuit discrete valve 30 thereby bypassing the fuel circuit discrete valve 30, wherein, in operation, fuel is delivered into the bypass fuel passageway 31 of the flow passageway 3 during start-up of the vehicle.

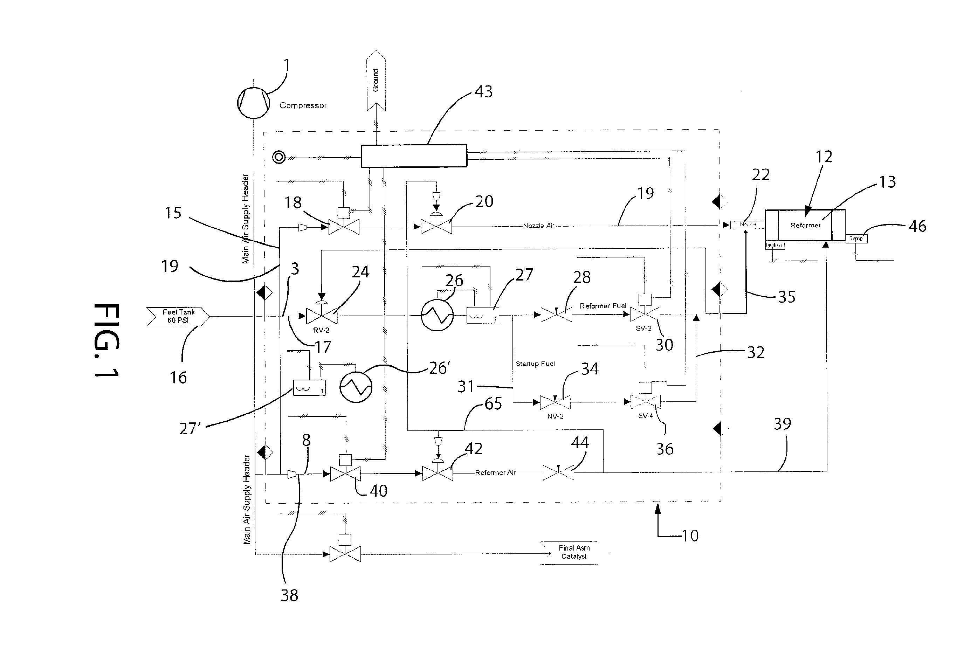

Referring now to the individual figures, FIG. 1 depicts a schematic illustration of a control module 10 (encircled by a dotted line) that is configured to deliver quantities of fuel and air to a diesel fuel reformer 12. Control module 10 generally includes a housing 11 that is fluidly connected to a source of compressed air 1 (e.g., an air compressor), a source of fuel 16 (e.g., a vehicle fuel tank) and a fuel reformer 12. The air compressor delivers a stream of compressed air into a nozzle air circuit 15 and a reformer air circuit 38 of control module 10. As will be described in greater detail hereinafter, the compressed air stream of nozzle air circuit 15 is ultimately delivered to a nozzle 22 of fuel reformer 12, and the compressed air stream of reformer air circuit 38 is ultimately delivered directly into a reformer chamber 13 of fuel reformer 12. A stream of diesel fuel emanating from the source of fuel 16 is distributed through a fuel circuit 17 of control module 10 and into nozzle 22 of fuel reformer 12. The fuel stream is combined with the air stream from nozzle air circuit 15 in nozzle 22. The nozzle air circuit 15, reformer air circuit 38, and fuel circuit 17 of control module 10 are described in greater detail hereinafter.

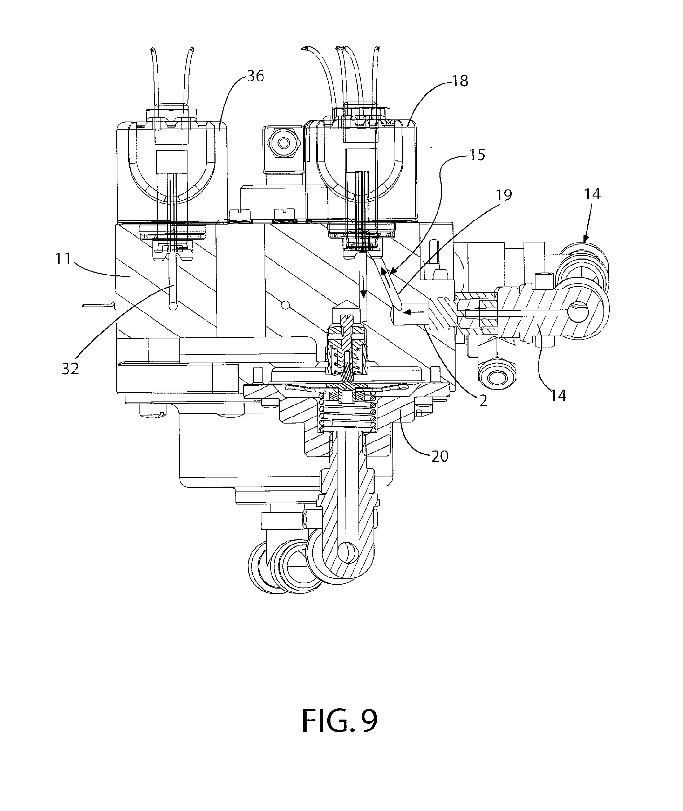

Referring now to nozzle air circuit 15 of control module 10 shown in FIGS. 1, 2 and 9, an air compressor 1 delivers a stream of compressed air through an inlet port 14 of control module 10. A tee 23 that is fluidly connected to inlet port 14 distributes a portion of the compressed air stream (hereinafter referred to as the nozzle air stream) through an inlet port 2 of housing 11 and into an air passageway 19 of nozzle air circuit 15. The nozzle air stream is introduced into air passageway 19 at a pressure of approximately 80 PSI and flow rate of approximately 15 standard cubic feet per minute (SCFM).

The nozzle air stream travels through air passageway 19 of nozzle air circuit 15 until it encounters a solenoid valve (SV) 18 positioned within air passageway 19. SV 18 is set to either an open position to permit the passage of air through passageway 19 or a closed position to prevent the passage of air through passageway 19. The structure and operation of a solenoid valve will be readily understood by those skilled in the art. Valve 18 may be a solenoid valve, or any other type of discrete valve having an open position and a closed position. Suitable solenoid valves are sold and distributed by Peter Paul Inc. of New Britain, Connecticut, USA.

Solenoid valve 18 is set to an open position during regular operation of the vehicle. When solenoid valve 18 is set to an open position, the nozzle air stream continues along air passageway 19 of circuit 15 until it encounters a fixed differential regulator valve (FDRV) 20. FDRV 20 maintains a constant pressure differential across a variable or fixed orifice, thereby providing a constant flow rate of the nozzle air stream regardless of variations in upstream or downstream pressure. Air is expelled from FDRV 20 at a flow rate of approximately 0.8 cubic feet per minute (SCFM) at a maximum pressure of 40 PSI. The structure and operation of an FDRV will be readily understood by those skilled in the art. Suitable fixed differential regulator valves are sold and distributed by ITT Conoflow Inc. of St. George, South Carolina, USA.

After passing through FDRV 20, the nozzle air stream is delivered through outlet port 5 of housing 11 (see FIG. 14D) and into a fitting 21 that is connected to outlet port 5. The nozzle air stream is distributed out of control module 10 via outlet port 5 of housing 11 at a pressure of approximately 25-40 PSI and flow rate of approximately 0.8 standard cubic feet per minute (SCFM). Although not explicitly shown, a conduit connects fitting 21 with nozzle 22 of fuel reformer 12 to deliver the nozzle air stream to nozzle 22.

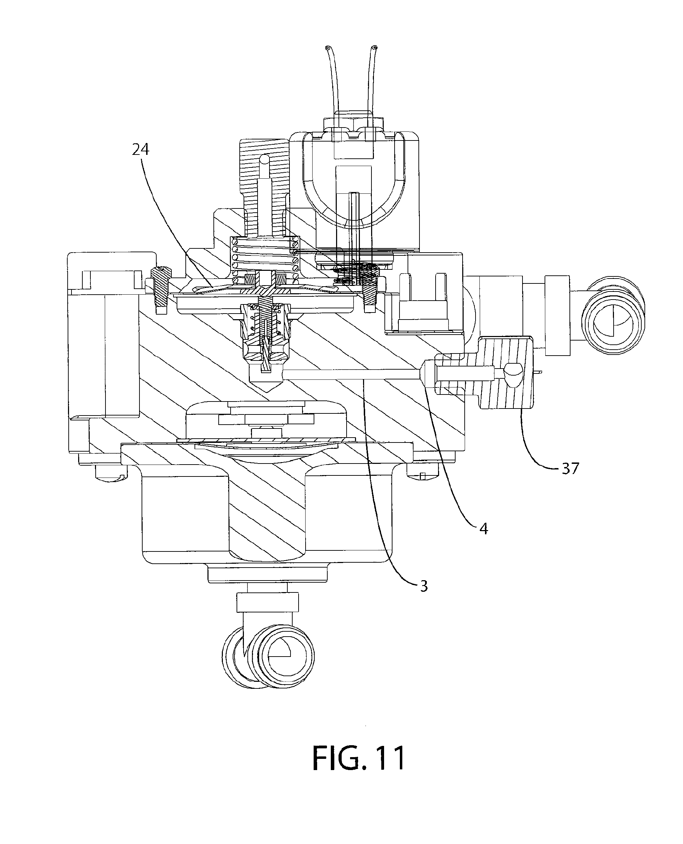

Referring now to fuel circuit 17 of control module 10 shown in FIGS. 1, 2, 8, 10 and 11, pressurized fuel from fuel source 16 is introduced into a fuel passageway 3 of fuel circuit 17 through an inlet port 37 of control module 10. The inlet port 37 of control module 10 is connected to an inlet port 4 of housing 11 (see FIG. 11). Fuel source 16 is maintained at 60 PSI, for example. The diesel fuel is introduced into fuel passageway 3 at a pressure of approximately 60 PSI and a flow rate of approximately 5 grams per hour.

The diesel fuel stream travels through fuel passageway 3 of fuel circuit 17 and passes through a FDRV 24. FDRV 24 maintains a constant pressure differential across a variable or fixed orifice regardless of variations in upstream or downstream pressure thereby reducing both the viscosity of the fuel and the turbulence of the flow of fuel. Fuel is expelled from FDRV 24 back into fuel passageway 3 at a maximum flow rate of approximately 54 grams per minute at a maximum pressure of 60 PSI.

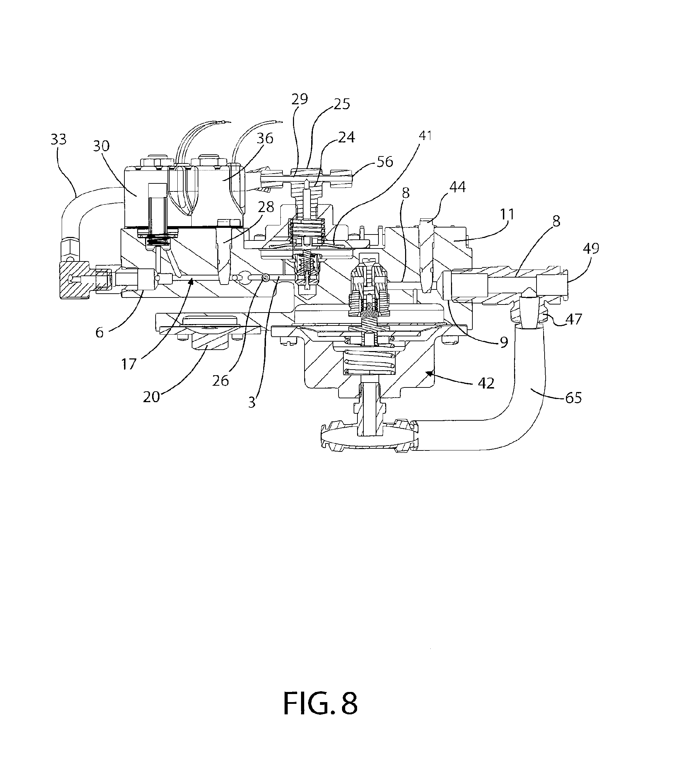

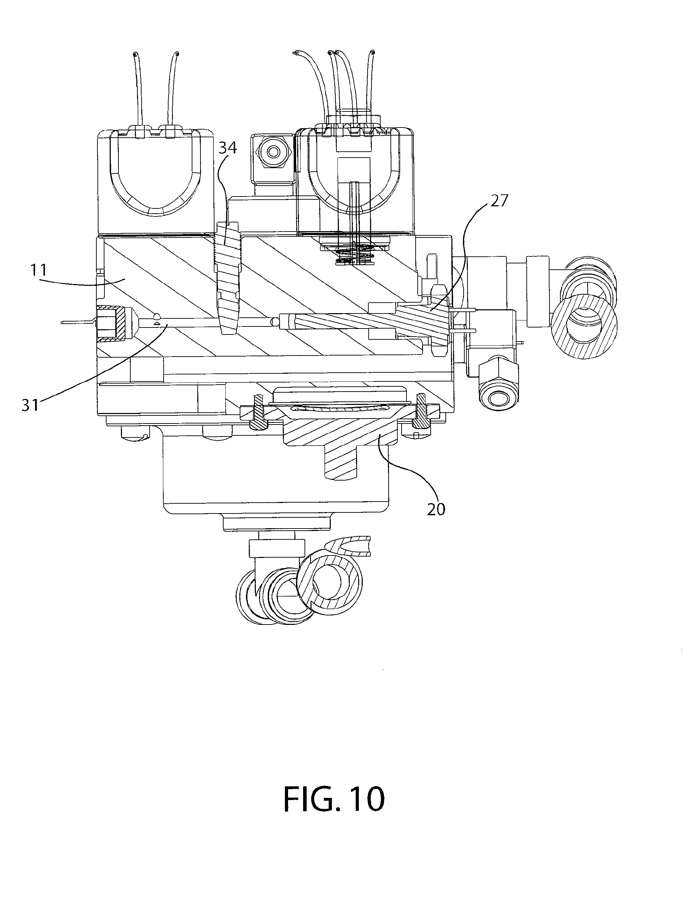

After passing through FDRV 24, the diesel fuel is heated to a temperature of about 144 degrees Fahrenheit, for example, by a glow plug 26 that is controlled by a thermostat 27 (see FIGS. 8 and 10). Glow plug 26 maintains a controlled viscosity of the fuel to enable needle valve 28 (described hereinafter) to delivery a repeatable constant fuel flow. Suitable glow plugs are sold and distributed by WAP Inc. of Shelbyville, Indiana, USA. Thermostat 27 may be of a snap-acting surface mount style, probe style or a thermistor style, for example. Suitable thermostats are sold and distributed by Fenwal Controls, Kidde-Fenwal Inc. of Ashland, Massachusetts, USA. An additional glow plug 26' and thermostat 27' are mounted directly to housing 11 for heating housing 11 to a predetermined temperature.

The heated diesel fuel then encounters a needle valve (NV) 28 which is positioned within the fuel passageway 3. Needle valves have a relatively small orifice with a long tapered conical seat, and a needle-shaped plunger on the end of a screw that bears against the conical seat. In an open position of a needle valve, fluid passes between a gap formed between the plunger and the seat. The screw has a fine thread which facilitates precise regulation of the fluid flow rate across the needle valve. Needle valves are typically employed to maintain a constant, calibrated, low flow rate. The structure and operation of a needle valve will be readily understood by those skilled in the art.

Needle valve 28 is ordinarily maintained in an open position to permit the passage of fuel therethrough. The heated diesel fuel flows past the open needle valve 28 until it encounters a solenoid valve (SV) 30 positioned within fuel passageway 3. The solenoid valve 30 is set to either an open position to permit the passage of fuel through fuel passageway 3 or a closed position to prevent the passage of fuel through fuel passageway 3. During regular operation of the vehicle, SV 30 is set to an open position, and the fuel stream is delivered through outlet port 6 of housing and into a conduit 33 that is connected to outlet port 6 of housing 11.

Conduit 33 is connected to a bonnet assembly 25 of FDRV 24 to provide a reference pressure for the topside of the diaphragm of FDRV 24. In operation, when the fuel pressure of fuel circuit 17 exceeds a pre-determined level, the fuel pressure within the bonnet assembly 25 biases the diaphragm 41 of FDRV 24 in a downward direction to close FDRV 24, thereby preventing the passage of fuel through passageway 3. If the fuel pressure of the fuel circuit 17 does not exceed the pre-determined level, FDRV 24 remains open to permit the passage of fuel through passageway 3. It should be understood that the interior of bonnet assembly 25 of FDRV 24 and fuel passageway 3 are physically isolated from each other by diaphragm 41. Thus, fuel that is distributed into the interior region of bonnet assembly 25 of FDRV 24 does not re-enter fuel passageway 3.

Bonnet assembly 25 of FDRV 24 includes a thru-hole 29 for distributing fuel from conduit 33 to a conduit 35 (conduit 35 only shown in FIG. 1) that is mounted to fuel outlet port 56 of FDRV 24. Outlet port 56 of FDRV is also the fuel outlet port 56 of control module 10. Conduit 35 distributes fuel from fuel outlet port 56 of control module 10 to the nozzle 22 of fuel reformer 12 (only shown in FIG. 1). During regular operation of the vehicle, fuel is delivered through fuel outlet port 56 of control module 10 and into nozzle 22 of fuel reformer 12 at a pressure of approximately 25-40 PSI and maximum flow rate of approximately 54 grams per minute.

Fuel circuit 17 includes a fuel bypass segment 31, the purpose of which will be described hereinafter. Fuel bypass segment 31 of fuel circuit 17 includes a fuel bypass passageway 32, and a needle valve (NV) 34 and a solenoid valve 36 which are each positioned within fuel bypass passageway 32. Fuel bypass passageway 32 is fluidly connected to fuel passageway 3 as shown in FIG. 1. Needle valve (NV) 34 regulates the flow rate of the fuel within bypass passageway 32 to a precise degree. Solenoid valve (SV) 36 is connected to bypass passageway 32 downstream of NV 34.

During regular operation of the vehicle, solenoid valve (SV) 36 is maintained in a closed position to prevent the passage of fuel through a fuel bypass segment 31 of fuel circuit 17. During start-up of the vehicle, however, SV 36 is set to an open position and SV 30 is set to a closed position, thereby diverting the fuel stream of fuel circuit 17 through a fuel bypass segment 31 of fuel circuit 17.

During start-up of the vehicle, SV 36 is set to an open position and SV 30 is set to a closed position to direct the fuel stream through bypass passageway 32. The fuel travels through SV 36, which is maintained in an open position during start-up, and is routed back to flow passageway 3 at a location that is downstream of SV 30. The fuel is then delivered out of housing 11 and into conduit 33. The fuel is delivered through conduit 33, through bonnet assembly 25 of FDRV 24, through conduit 35 that is coupled to outlet port 56 of control module 10 and into nozzle 22 of fuel reformer 12. During start-up of the vehicle, the fuel stream is distributed through outlet port 56 of control module 10 and into nozzle 22 of fuel reformer 12 at a pressure of approximately 60-80 PSI and flow rate of approximately 0.5 grams per 10 seconds.

During regular operation and start-up of the vehicle, the fuel stream and the nozzle air stream are delivered into nozzle 22 of fuel reformer 12. The fuel stream of fuel circuit 17 mixes with the nozzle air stream within the interior region of nozzle 22. The fuel-air mixture is then ignited and piloted into reformer chamber 13 of fuel reformer 12.

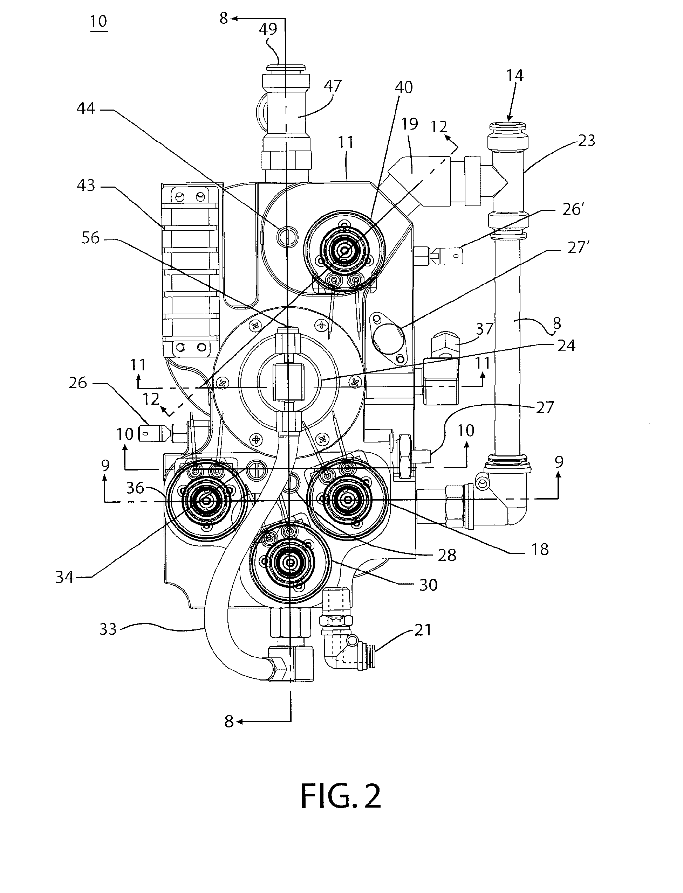

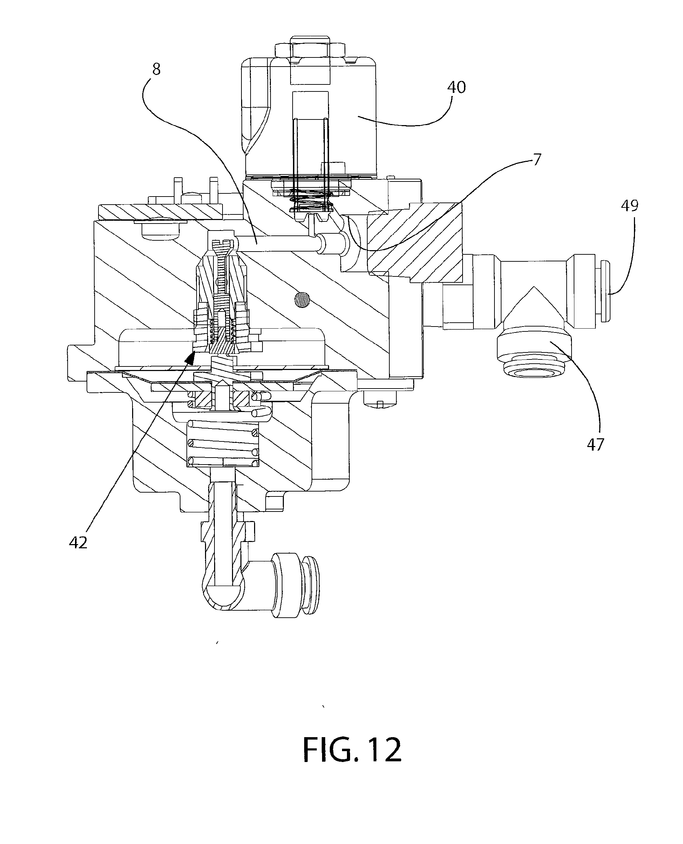

Referring now to reformer air circuit 38 of control module 10 shown in FIGS. 1, 2, 8 and 12, the air compressor delivers a stream of compressed air through inlet port 14 of control module 10 (see FIG. 2). A tee 23 that is fluidly connected to inlet port 14 distributes a portion of the compressed air stream (hereinafter referred to as the reformer air stream) through an inlet port 7 (see FIG. 12) of housing 11 and into an air passageway 8. The remaining portion of the compressed air stream is distributed into nozzle air circuit 15, as described previously. The reformer air stream is introduced into air passageway 8 at a pressure of approximately 25-40 PSI and a flow rate of approximately 9 standard cubic feet per minute (SCFM).

The reformer air stream travels through air passageway 8 of reformer air circuit 38 until it encounters a solenoid valve (SV) 40. SV 40 is set to either an open position to permit the passage of reformer air through air passageway 8 or a closed position to prevent the passage of reformer air through air passageway 8. Solenoid valve 40 is set to an open position during regular operation of the vehicle. When SV 40 is set to an open position, the reformer air stream continues along circuit 38 and is delivered to a fixed differential regulator valve (FDRV) 42. FDRV 42 maintains a constant flow rate of the reformer air stream regardless of variations in upstream or downstream pressure. Air is expelled from FDRV 42 at a flow rate of approximately 8.5 cubic feet per minute (SCFM) at a maximum pressu re of 40 PSI.

After passing through FDRV 42, the reformer air stream is delivered to needle valve (NV) 44 which regulates the flow rate of the reformer air stream to a precise degree. The reformer air stream is then distributed out of housing 11 through outlet port 9 (see FIG. 8) of housing 11 and into a tee 47 that is connected to outlet port 9. A conduit 39 (see FIG. 1) connects outlet port 49 of tee 47 and reformer chamber 13 of fuel reformer 12. The reformer air stream is delivered to reformer chamber 13 via conduit 39 at a pressure of approximately 25-40 PSI and a flow rate of approximately 9 standard cubic feet per minute (SCFM). Selectively delivering reformer air to reformer chamber 13 regulates the internal temperature of reformer chamber 13, as measured by thermocouple 46.

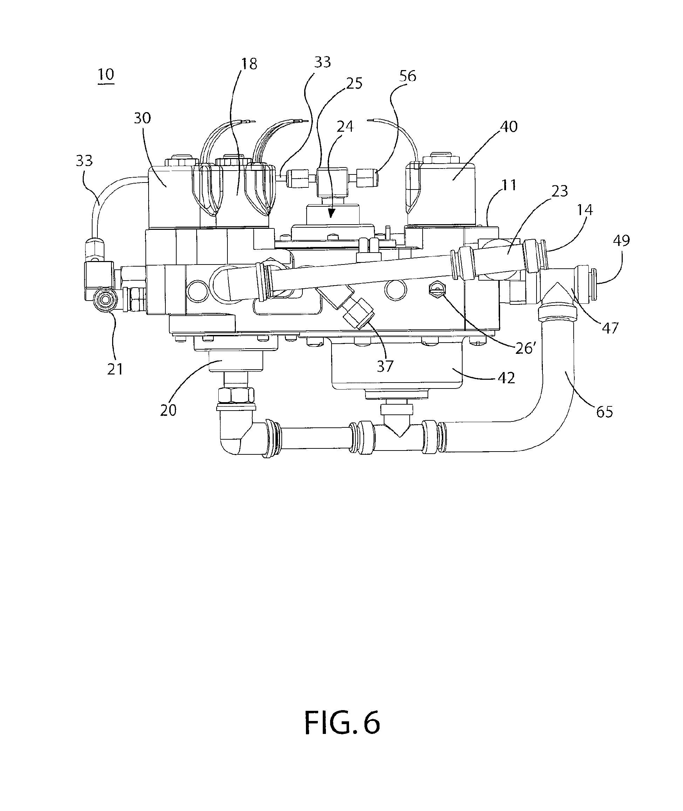

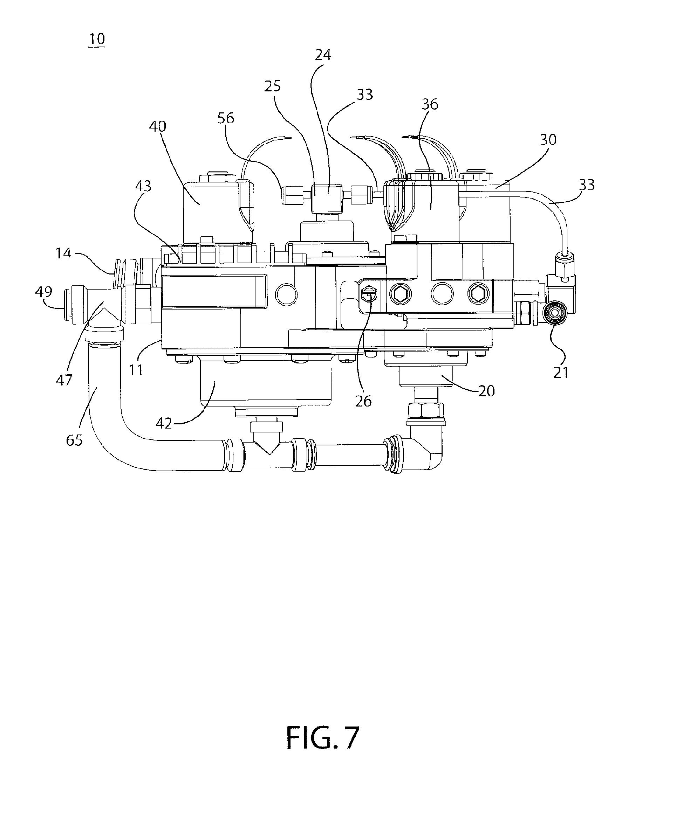

As best shown in FIGS. 1 and 6-8, conduit 65 is connected to another outlet port of tee 47. Conduit 65 is connected to the bonnet assemblies of FDRV 42 and FDRV 20 to provide a reference pressure for the topside of the diaphragm of those valves.

Although not explicitly shown, a processor controls the operation of glow plugs 26 and 26' and solenoid valves 18, 30, 36, and 40. The processor sends commands to activate glow plugs 26 and 26' during start-up of the vehicle. The processor sends commands to open or close solenoid valves 18, 30, 36 and 40 at pre-determined times and conditions. As shown in FIG. 1, solenoid valves 18, 30, 36 and 40 are electrically connected to a terminal block 43 that is electrically grounded.

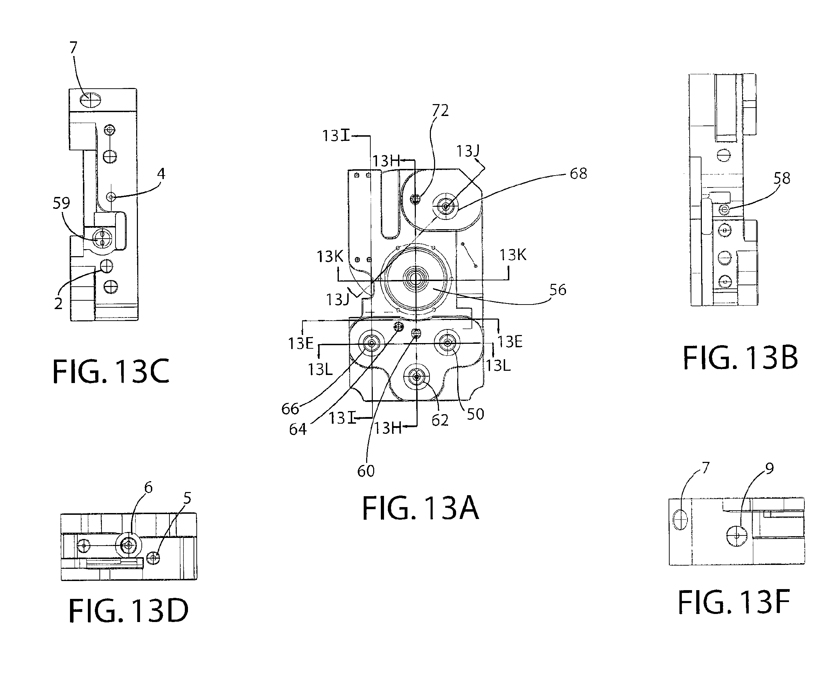

FIGS. 13A-13L depict the control module housing 11 of control module 10. Housing 11 includes multiple fluid flow passages and bores to accommodate the fuel and compressed air circuits shown in FIG. 1. As opposed to interconnecting the various valves of circuits together with fittings, seals and conduits, housing 11 offers a useful and convenient way to fluidly connect all of the valves together in a single, self-contained unit.

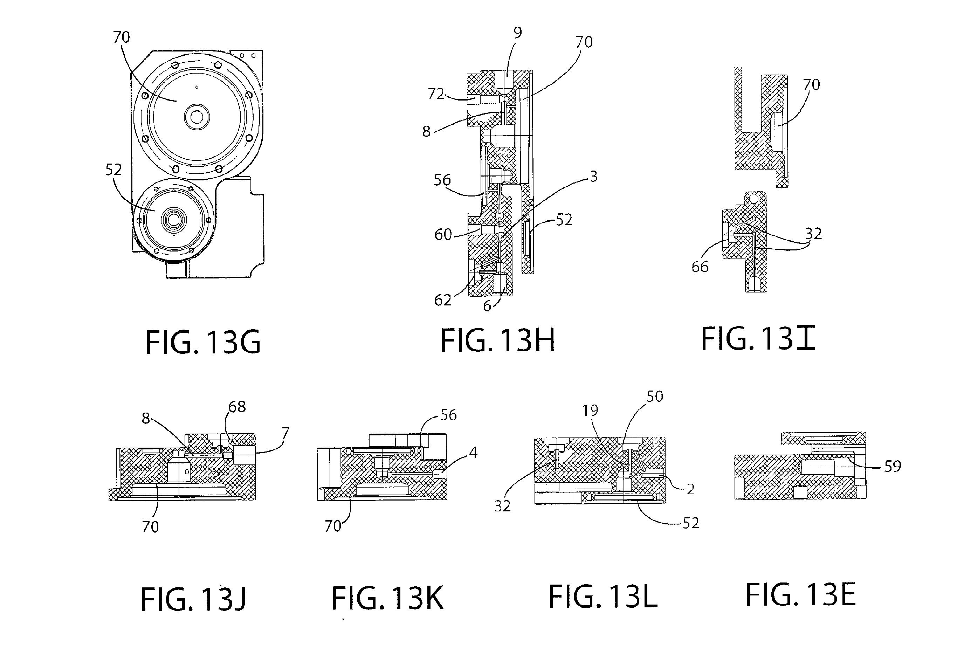

Housing 11 includes bores and passageways to accommodate elements of nozzle air circuit 15. More particularly, inlet port 2 (FIG. 13C) and outlet port 5 (FIG. 13D) are disposed on side surfaces of housing 11. Nozzle air passageway 19 (FIG. 13L) extends between inlet port 2 and outlet port 5. A bore 50 (FIG. 13A) is formed on the top surface of housing 11 to accommodate solenoid valve 18, and a bore 52 (FIG. 13G) is formed on the bottom surface of housing 11 to accommodate regulator valve 20. The bores 50 and 52 intersect nozzle air passageway 19.

Housing 11 includes bores and passageways to accommodate elements of fuel circuit 17. More particularly, inlet port 4 (FIGS. 13C and 13K) and outlet port 6 (FIG. 13D) are disposed on side surfaces of housing 11. Fuel passageway 3 (FIG. 13H) extends between inlet port 4 and outlet port 6. A bore 56 (FIGS. 13A, 13H and 13K) is formed on the top surface of housing 11 to accommodate regulator valve 24, a bore 58 (FIG. 13B) is formed on a side surface of housing 11 to accommodate glow plug 26, a bore 59 (FIGS. 13B and 13E) is formed on a side surface of housing 11 to accommodate thermostat 27, a bore 60 (FIG. 13A) is formed on the top surface of housing 11 to accommodate needle valve 28, and a bore 62 (FIG. 13A) is formed the top surface of housing 11 to accommodate solenoid valve 30. Each bore 56, 58, 59, 60 and 62 intersects fuel passageway 3.

Fuel bypass segment 31 (see FIG. 1) of fuel circuit 17 includes fuel bypass passageway 32 (FIG. 13I), which is fluidly connected to fuel passageway 3 of fuel circuit 17. Bores 64 and 66 (FIGS. 13A and 13I) are formed on the top surface of housing 11 to accommodate needle valve 34 and solenoid valve 36, respectively, of fuel bypass segment 31. The bores 64 and 66 intersect fuel bypass passageway 32, and fuel bypass passageway 32 intersects fuel passageway 3 at two different locations (i.e., upstream and downstream of SV 30).

Housing 11 also includes bores and passageways to accommodate elements of reformer air circuit 38. Reformer air passageway 8 (FIGS. 13H and 13J) of reformer air circuit 38 extends between inlet port 7 (FIGS. 13F and 13J) and outlet port 9 (FIGS. 13F and 13H). Inlet port 7 and outlet port 9 are disposed on side surfaces of housing 11. A bore 68 (FIGS. 13A and 13J) is formed on the top surface of housing 11 to accommodate solenoid valve 40, a bore 70 (FIGS. 13G, 13H and 13J) is formed on a bottom surface of housing 11 to accommodate regulator valve 42, and a bore 72 (FIGS. 13A and 13H) is formed on the top surface of housing 11 to accommodate needle valve 44. The bores 68, 70 and 72 intersect reformer air passageway 8.

Housing 11 is a machined block of aluminum. Housing 11 may be composed of any conductive material, and is not limited to aluminum. Although not explicitly described, housing 11 includes threaded holes, or other fastening means, for retaining each of the valves in place.

Although the invention is illustrated and described herein with reference to specific embodiments, the invention is not intended to be limited to the details shown. Rather, various modifications may be made in the details within the scope and range of equivalents of the claims and without departing from the invention. For example, the control module is not limited to processing diesel fuel, as it may be adapted to process any type of fuel.

## Claims

1. A control module for regulating and delivering quantities of compressed air and fuel to a fuel reformer, said control module comprising:
a housing including multiple fluid flow passages;
at least one compressed air circuit that is configured to be coupled to a source of compressed air;
a fuel circuit that is configured to be coupled to a source of fuel, wherein each circuit includes: (i) a flow passageway formed in the housing that extends between an inlet port that is configured to be fluidly coupled to either the source of compressed air or the source of fuel and an outlet port that is configured to be fluidly coupled to the fuel reformer to deliver either compressed air or fuel into the fuel reformer, respectively, (ii) a discrete valve positioned within the flow passageway that is configured to either permit the passage of fluid through the flow passageway in an open position of the discrete valve or prevent the passage of fluid through the flow passageway in a closed position of the discrete valve, and (iii) a regulator valve positioned within the flow passageway that is configured to maintain a constant pressure differential across the flow passageway.

2. The control module of claim 1 further comprising a needle valve positioned within the flow passageway of the fuel circuit for regulating the flow rate of the fuel through the flow passageway.

3. The control module of claim 2, wherein the needle valve is positioned within the flow passageway between the discrete valve and the regulator valve.

4. The control module of one of the preceding claims, further comprising another compressed air circuit for delivering compressed air into the fuel reformer.

5. The control module of one of the preceding claims, further comprising a heater for heating fuel within the passageway of the fuel circuit.

6. The control module of claim 5, wherein the heater is a glow plug.

7. The control module of claim 5, wherein the heater is controlled by a thermostat.

8. The control module of one of the preceding claims, further comprising a bypass fuel passageway that is fluidly coupled to the flow passageway of the fuel circuit and extends between a location that is upstream of the discrete valve of the fuel circuit and a location that is downstream of the discrete valve of the fuel circuit.

9. The control module of claim 8 further comprising a discrete valve that is configured to either permit the passage of fuel through the bypass fuel passageway in an open position of the discrete valve or prevent the passage of fuel through the bypass fuel passageway in a closed position of the discrete valve.

10. The control module of claim 9 further comprising a needle valve that is configured to regulate a flow rate of fuel within the bypass fuel passageway.

11. The control module of one of the preceding claims, wherein the discrete valve is actuated by a solenoid.

12. The control module of one of the preceding claims, wherein the regulator valve is a fixed differential regulator valve.

13. A control module for regulating and delivering quantities of compressed air and fuel to a fuel reformer of a vehicle, said control module having in particular the features of one of the preceding claims, and comprising:
a housing including a compressed air circuit and a fuel circuit that is separate from the compressed air circuit,
said fuel circuit including: (i) a flow passageway formed in the housing that extends between an inlet port that is configured to be fluidly coupled to a source of fuel and an outlet port that is configured to be fluidly coupled to a fuel reformer to deliver fuel into the fuel reformer, (ii) a regulator valve that is positioned downstream of the inlet port of the flow passageway to maintain a constant pressure differential across the flow passageway, (iii) a discrete valve that is configured to either permit the passage of fuel through the flow passageway in an open position of the discrete valve or prevent the passage of fuel through the flow passageway in a closed position of the discrete valve, and (iv) a bypass fuel passageway that is fluidly coupled to the flow passageway and extends between a location that is upstream of the discrete valve and a location that is downstream of the discrete valve thereby bypassing the fuel circuit discrete valve, wherein, in operation, fuel is delivered into the bypass fuel passageway of the flow passageway during start-up of the vehicle.

14. The control module of one of the preceding claims, further comprising a discrete valve that is configured to permit the passage of fuel through the bypass fuel passageway during start-up of the vehicle.
